(19) Europäisches Patentamt
European Patent Office
Office européen des brevets

(11) EP 0 592 429 B1

(12) EUROPEAN PATENT SPECIFICATION

(45) Date of publication and mention
of the grant of the patent:
**01.09.1999 Bulletin 1999/35**

(51) Int. Cl.$^6$: **A01N 43/16**, A01N 31/02,
A01N 25/24

(21) Application number: **91917512.5**

(22) Date of filing: **16.09.1991**

(86) International application number:
**PCT/SE91/00613**

(87) International publication number:
**WO 92/05699 (16.04.1992 Gazette 1992/09)**

(54) **INSECTICIDE COMPOSITION**

INSEKTIZIDE ZUSAMMENSETZUNG

COMPOSITION INSECTICIDE

(84) Designated Contracting States:
**AT BE CH DE DK ES FR GB IT LI NL**

(30) Priority: **02.10.1990 SE 9003133**
**21.11.1990 SE 9003700**

(43) Date of publication of application:
**20.04.1994 Bulletin 1994/16**

(73) Proprietor: **Rubensson, Anders**
**722 15 Västeras (SE)**

(72) Inventor: **Alde, Alexander**
**794 31 Orsa (SE)**

(74) Representative:
**Engström, Christer et al**
**Smultronvägen 61**
**331 42 Värnamo (SE)**

(56) References cited:
EP-A- 0 051 786        EP-A- 0 352 010
CH-A- 657 750          DE-C- 162 766
DE-C- 924 113          GB-A- 2 176 107
SE-A- 77 111 417       US-A- 4 348 424

• VEB Wilhelm Knapp Verlag Halle (Saale), 1953,
"Schaedlingsbekaempfungsmittel", CARL
BECHER, see page 37.
• PATENT ABSTRACTS OF JAPAN, Vol. 12, No.
172, C497; & JP,A,62 281 805 publ 1987- 12-07
DAICEL CHEM IND LTD et al.
• Dialog Information Services, File 351, World
Patent Index 81-91, Dialog Accession No.
2674970, JOHNSON K.K.: "Controlling
household pests such as spiders and flies by
spraying with foamed aq. soln. cont. a soap or
surfactant and a thickener"; & JP,A,56 032 944,
810402, 8120.

**Description**

The present invention relates to an insecticide composition and a method of combating vermin and insects on plants by applying to the plants an aqueous solution of the insecticide composition.

With an increasing knowledge of the harmful effects in nature which are caused by remainders of insecticides, the need for a non-poisonous insecticide has become increasingly pronounced. Non-poisonous in the sense here used means that the insecticide should not be poisonous to anything but the vermin and insects which are to be combated.

Large quantities of poisonous insecticides are sprayed every year on farms, in vegetable gardening, on fruit farms etc. This means that for the purpose of increasing the harvest yield, poison is deliberately sprayed on foodstuffs. To reduce the harmful effects, limits are set for the amount of residual poison which is allowed to remain in the foodstuff when ready to be consumed. These limits are frequently subjective values, since it is difficult to scientifically establish limits for tee amounts of insecticide that are harmless to people and animals. In most cases, there is a limit set for each insecticide, whereas there are no limits for the total amount of different insecticides that is to be found on or in the cultured products.

The amounts of insecticides which are not absorbed by the crops involved are washed off by rain-water and collected in the subsoil water or are spread in lakes and watercourses.

A known, so-called non-poisonous insecticide composition comprises gelatin as a gel- and/or film-forming agent along with a tenside mixture (see SE patent publication 461,495). Gelatin solutions of this known type have several drawbacks. They can be attacked by iron and copper, which causes discoloration. Moreover, the gelatin solution can be decomposed under the action of microorganisms which damage the surroundings as the preparation is applied to the plant. High temperatures and/or low pH values also affect the gelatin in a decomposing manner. The known gelatin composition therefore must be handled under extreme hygienic conditions which can be difficult to achieve.

The object of the present invention is to provide an insecticide composition acting mechanically, without the above-mentioned drawbacks.

This object is achieved by means of an insecticide composition which comprises, as an active ingredient, a divalent or polyvalent alcohol in combination with a film-forming agent and, optionally, a carrier and/or a nutrient.

The invention also includes a method of combating vermin and insects on plants by applying to the plants an aqueous solution of the insecticide composition.

The ingredients included in the composition according to the invention are innocuous to people and animals other than the vermin and insects which are to combated. Nor do they constitute a danger if they are spread in lakes and watercourses or reach the subsoil water. Further, the ingredients are biodegradable.

The composition is - water soluble also in the dried state and can thus be washed down from the treated plant after a suitable period of treatment. This is of great value both from the aesthetic and from the psychological point of view.

The insecticide composition according to the invention is prepared in solid form to be dissolved in water before being used. By preparing the composition in solid form, suitably in the form of flakes, great advantages are obtained. The packing will be easy, and the insecticide takes up a very small volume in stock and in shops and also at the consumer's place. No water need be transported, which makes the distribution inexpensive. Nor is there a need for expensive packings in the form of bottles or the like, but the insecticide can be simply packed in e.g. plastic bags on which instructions for the use of the composition are printed. As an alternative, the composition can be formed into tablets which are packeted in so-called blisterpacks. Also in this case, the weight will be minimal and the transport expenses very small. In the solid form, the insecticide can also conveniently be distributed by mail.

A further alternative is to supply the product in the form of a concentrate in an aqueous solution to be mixed with water to a solution ready to use.

The actual insecticide ingredient in the composition is the divalent or polyvalent alcohol. By the combination with the film-forming agent, the alcohol produces a sufficiently long effect to cause almost all vermin and insects on the treated plant to be killed.

The divalent or polyvalent alcohol acts in the combination also by delaying the drying time of the film-forming agent.

Thus, it is the combination of the two ingredients that develops the excellent effect of the composition according to the invention.

The divalent or polyvalent alcohol is preferably selected among glycerol, mono-, di- and triethylene glycol and polyalkene glycol having a molecular weight of $\leq 1000$.

The film-forming agent preferably is a water-soluble cellulose ether or a polyuronic acid or a salt thereof. At present, carboxymethylcellulose (CMC) is preferred.

There have been experiments with treatment against plant-lice, mite, white flies, scabies, grasshoppers, slugs and also forest insects, such as pith beetles and bark beetles. About 6 h after applying the composition according to the invention, 100% of the vermin and insects were dead.

The composition according to the invention preferably also comprises a carrier. As carriers, mention can be made of sodium hydroxide, sulphonic acid, ethanol, methyl/ethylparaben, sodium laurylether sulphate, oxoalcohol ethoxylate, urea, coconut fatty acid diethanolamide. These can partly be used alone or in combination. The carriers have a binding, emulsifying, surface tension reducing, stabilizing and/or preserving effect.

To make it possible for a damaged plant quickly to recover after an insect invasion, the composition according to the invention should suitably contain a nutrient in the form of a complete fertilizer in suitable proportions. As a result, the plant is protected against, inter alia, drying.

The composition is prepared by heating and mixing the ingredients included and kneading the mixture to a homogeneous paste. The paste is cooled and can subsequently be ground into flakes and then packed, for example in plastic bags. The paste can also be compressed into tablets and packeted in blisterpacks.

The composition can also be dissolved in hot water to a concentrate in liquid form, which is then packed in some suitable manner.

The amounts of the ingredients included can be selected within wide limits. The lower limit of the amount of divalent or polyvalent alcohol in relation to the film-forming agent is determined by the desired delay of the drying of the film-forming agent. Suitable proportions are 40-90 parts by weight of the alcohol and 10-60 parts by weight of the film-forming agent per 100 parts by weight of the combination of these ingredients. A preferred range is 45-85 parts by weight of the alcohol and 15-55 parts by weight of the film-forming agent.

The invention will be illustrated in more detail by means of the Examples below which are not intended to restrict the invention as defined in the claims.

Example 1

A composition that can be used for preparing flakes was mixed from the following ingredients:

| Ingredient | % by weight | g |
|---|---|---|
| Glycerol 99% | | 50 |
| Carboxymethylcellulose (CMC) | | 50 |
| Carrier: | | |
| Water | 74.25 | |
| NaOH (45%) | 2.87 | |
| Sulphonic acid | 10.62 | |
| Ethanol | 1.73 | |
| Methyl-/ethylparaben | 0.20 | |
| Sodium laurylether sulphate (28%) | 2.12 | |
| Oxoalcohol ethoxylate 8 moles EO | 6.25 | |
| Urea | 1.56 | |
| Coconut fatty acid diethanolamide | 0.40 | |
| (adjusted at pH 6.5 ± 0.5) | 100.00 | 150 |
| "NPK" nutrient | | 150 |
| | | 400 |

The ingredients were heated and kneaded together and then ground into flakes.

The ingredients can also be compressed into tablets.

By mixing e.g. 400 g of the composition with 600 g of water, a concentrate is obtained, which can then be diluted to a suitable concentration before being used.

The above flake-formed composition is suitably dosed as follows:

5 g/l:          as a preventive agent against insects on pot-plants at home.

10 g/l: for commercial use against insects in greenhouses, in fields and in dwelling-houses.

15 g/l: for treating fruit farms, bushes, fruit trees and in farming.

20-30 g/l: for spraying ant-hills, forests, wood depots etc.

In these dosages, the composition kills 100% of plant lice within 6 h.

Example 2

Two compositions were mixed as described in Example 1, but the following amounts of the included ingredients were used:

| Ingredient | g | g |
|---|---|---|
| Glycerol 99% | 60 | 70 |
| CMC | 30 | 10 |
| Carrier | 160 | 170 |
| "NPK" | 150 | 150 |
| | 400 | 400 |

By adapting the dosage the same good results are achieved in the combating of vermin, i.e. 100% killed within 6 h.

**Claims**

1. Insecticide composition, **characterised** in that it comprises, as active ingredients, 40-90 parts by weight of a divalent or polyvalent alcohol, selected among glycerol, mono-, di- and triethylene glycol and polyalkylene glycol having a molecular weight of ≤ 1000, in combination with 10-60 parts per weight of a film-forming agent, selected among a water-soluble cellulose ether or a polyuronic acid or a salt thereof, per 100 parts by weight of the combination of divalent or polyvalent alcohol and film-forming agent, and, optionally, a carrier and/or a nutrient.

2. Insecticide composition as claimed in claim 1, **characterised** in that said film-forming agent is carboxymethylcellulose.

3. Insecticide composition as claimed in claim 1 or 2, **characterised** in that it is present in the form av flakes or tablets, or in liquid form.

4. Method of combating vermin and insects on plants, **characterised** in that an aqueos solution of an insecticide composition is applied to the plants, said composition comprising, as active ingredients, a combination of 40-90 parts per weight of a divalent or polyvalent alcohol, selected among glycerol, mono-, di- and triethylene glycol and polyalkylene glycol having a molecular weight of ≤ 1000, and 10-60 parts per weight of a film-forming agent, selected among a water-soluble cellulose ether or a polyuronic acid or a salt thereof, per 100 parts per weight of the combination of divalent or polyvalent alcohol and film-forming agent, and, optionally, a carrier and/or a nutrient.

**Patentansprüche**

1. Insektizid-Zusammensetzung, dadurch gekennzeichnet, daß sie als aktive Inhaltsstoffe 40-90 Gewichtsanteile eines bivalenten oder polyvalenten Alkohols, ausgewählt aus Glyzerin, Mono-, Di- und Triethylen-Glykol und Polyalkyl-Glykol mit einem Molekulargewicht von ≤ 1000, in Kombination mit 10-60 Gewichtsanteilen eines filmbildenden Wirkstoffs, ausgewählt aus einem wasserlößlichen Cellulose-Ether oder einer polyuronischen Säure oder einem Salz davon, pro 100 Gewichtsanteile der Kombination aus bivalentem oder polyvalentem Alkohol und filmbildendem Wirkstoff und wahlweise einen Träger und/oder einen Nährstoff aufweist.

2. Insektizid-Zusammensetzung nach Anspruch 1, dadurch gekennzeichnet, daß der filmbildende Wirkstoff Carboxymethylcellulose ist.

3. Insektizid-Zusammensetzung nach Anspruch 1 oder 2, dadurch gekennzeichnet, daß sie in Form von Flocken oder Tabletten oder in flüssiger Form vorliegt.

4. Verfahren zum Bekämpfen von Schädlingen und Insekten auf Pflanzen, dadurch gekennzeichnet, daß eine wäßrige Lösung aus einer Insektizid-Zusammensetzung auf die Pflanzen aufgetragen wird, wobei die Verbindung als aktive Inhaltsstoffe 40-90 Gewichtsanteile eines bivalenten oder polyvalenten Alkohols, ausgewählt aus Glyzerin, Mono-, Di- und Triethylen-Glykol und Polyalkyl-Glykol mit einem Molekulargewicht von ≤ 1000, in Kombination mit 10-60 Gewichtsanteilen eines filmbildenden Wirkstoffs, ausgewählt aus einem wasserlößlichen Cellulose-Ether oder einer polyuronischen Säure oder einem Salz davon, pro 100 Gewichtsanteile der Kombination aus bivalentem oder polyvalentem Alkohol und filmbildendem Wirkstoff und wahlweise einen Träger und/oder einen Nährstoff aufweist.

**Revendications**

1. Composé d'insecticide, caractérisé en ce qu'il comprend, comme ingrédients actifs, 40-60 parties en poids d'un alcool bivalent ou polyvalent, sélectionné parmi la glycérine, le mono-, di- et triéthylène-glycol et le glycol de polyalkyle ayant un poids moléculaire de ≤ 1000, en combinaison avec 10-60 parties en poids d'un agent filmogène, sélectionné parmi un éther de cellulose soluble dans l'eau ou un acide polyuronique ou un sel de ce-dernier, par 100 parties en poids de ladite combinaison d'alcool bivalent ou polyvalent et d'agent filmogène, et, de manière optionnelle un porteur et/ou un aliment.

2. Composé d'insecticide selon la revendication 1, caractérisé en ce que ledit agent filmogène est la cellulose carboxyméthylique.

3. Composé d'insecticide selon la revendication 1 ou 2, caractérisé en ce qu'il se présente soit sous forme de flocons ou de comprimés, soit sous forme de liquide.

4. Procédé pour combattre la vermine et les insectes sur des plantes, caractérisé en ce que l'on applique une solution aqueuse d'un composé d'insecticide auxdites plantes, ledit composé comprenant, comme ingrédients actifs, 40-60 parties en poids d'un alcool bivalent ou polyvalent, sélectionné parmi la glycérine, le mono-, di- et triéthylène-glycol et le glycol de polyalkyle ayant un poids moléculaire de ≤ 1000, en combinaison avec 10-60 parties en poids d'un agent filmogène, sélectionné parmi un éther de cellulose soluble dans l'eau ou un acide polyuronique ou un sel de ce-dernier, par 100 parties en poids de ladite combinaison d'alcool bivalent ou polyvalent et d'agent filmogène, et, de manière optionnelle un porteur et/ou un aliment.